**Europäisches Patentamt**

**European Patent Office**

**Office européen des brevets**

(11) Veröffentlichungsnummer: **0 648 601 A1**

# EUROPÄISCHE PATENTANMELDUNG

(21) Anmeldenummer: **94115469.2**

(51) Int. Cl.⁶: **B32B 27/08**

(22) Anmeldetag: **30.09.94**

(30) Priorität: **13.10.93 DE 4334789**

(43) Veröffentlichungstag der Anmeldung:
**19.04.95 Patentblatt 95/16**

(84) Benannte Vertragsstaaten:
**AT BE CH DE DK ES FR GB IT LI NL SE**

(71) Anmelder: **WOLFF WALSRODE AG**

**D-29655 Walsrode (DE)**

(72) Erfinder: **Tamke, Heiko, Dipl. Ing.**
**Dr. Schomerus-Strasse 4**
**D-29664 Walsrode (DE)**
Erfinder: **Reiners, Ulrich Dr.**
**Blumenstrasse 15**
**D-29643 Neuenkirchen (DE)**

(74) Vertreter: **Braun, Rolf, Dr. et al**
**Bayer AG,**
**Konzernzentrale RP,**
**Patente Konzern**
**D-51368 Leverkusen (DE)**

(54) **Metall- und Chlorfreie Barrierefolie für Gase und Aromastoffe.**

(57) Mehrschichtige Verbundfolie, bestehend aus Gas-Barriereschicht A, Heißsiegelschicht C sowie gegebenenfalls Klebe- bzw. Verbindungsschicht B, wobei die einzelnen Schichten in der Verbundfolie wie folgt angeordnet sind:

A eine metall- und chlorfreie Gas-Barriereschicht,

B eine Klebe- oder Verbindungsschicht,

C eine Heißsiegelschicht aus amorphem Polyester bzw. Copolyester oder aus einem amorphen, schlagzäh modifizierten Polyester oder Copolyester.

EP 0 648 601 A1

Die vorliegende Erfindung betrifft eine transparente Verbundfolie mit hoher Sperrwirkung gegen Gase und Aromastoffe, die sich durch hohe Steifigkeit bei geringem Materialeinsatz auszeichnet und die eine Heißsiegelschicht aus amorphem Polyester besitzt.

Die Verwendung von mehrschichtigen Verbundfolien für die Verpackung von besonders empfindlichen Füllgütern, z.B. von Lebensmitteln, die durch Sauerstoff oxidativ verändert werden können oder die durch den Verlust des Eigenaromas unbrauchbar werden, ist seit langem bekannt Die Verpackung dieser Güter erfolgt oft unter Vakuum oder Schutzgas. Für diesen Einsatz muß die Umhüllung entsprechende Gas-Barriereeigenschaften besitzen. Um das Füllgut vor der Aufnahme von Fremdgeruch oder vor dem Verlust des Eigenaromas zu bewahren, ist es weiterhin nötig, daß die Folie über Sperreigenschaften für Aromastoffe verfügt.

Bestimmte Verpackungsformen wie z.B. Standbeutel oder Siegelrandbeutel oder bestimmte Verpackungsmaschinen verlangen eine hohe Steifigkeit der Verbundfolie, die durch eine besondere Materialauswahl und/oder -dicke erzielt wird.

Es ist der Stand der Technik, für solche Anwendungsfälle Aluminiumverbundfolien mit Polyolefin-Siegelschichten einzusetzen, die hohe Sperrwirkung und Steifigkeit gewährleisten. Oft sind transparente Verpackungen gewünscht. Dann werden Folien aus Barrierekunststoffen wie z.B. Polyamid, Polyvinylalkohol oder Ethylenvinylalkohol oder PVDC-lackierte Folien wie Polyester oder Zellglas mit Polyolefin-Siegelschichten kombiniert. Um einen Verbund mit gewünscht hoher Steifigkeit herzustellen, müssen die Siegelschichten dann in großer Dicke gewählt werden oder es wird eine dritte Kunststoffolie als zusätzliche Schicht eingesetzt. Die Polyolefin-Siegelschichten haben zusätzlich die Eigenschaft, daß sie in den üblichen Dicken nur eine geringe Barriere für Aromastoffe darstellen, so daß bei empfindlichen Füllgütern eine andere Komponente Aromasperreigenschaften besitzen muß.

In der Lebensmittelindustrie besteht die Forderung nach metall- und chlorfreien Verbundfolien mit hoher Barrierewirkung für Gase und Aromen, die weiterhin zur Verminderung des Verpackungsaufwandes mit möglichst geringem Materialaufwand eine hohe Planlage und Steifigkeit gewährleisten.

Es stellte sich daher die Aufgabe, eine verbesserte Verbundfolie zur Verfügung zu stellen, die
- eine gute Barriere gegen Gase und Aromastoffe
- eine hohe Steifigkeit
- bei gleichzeitig geringem Materialbedarf

aufweist.

Gegenstand der Erfindung ist daher eine Verbundfolie, die dadurch gekennzeichnet ist, daß sie im wesentlichen folgende Schichten in dieser Reihenfolge aufweist:

A) eine metall- und chlorfreie Gas-Barriereschicht,

B) eine Klebe- oder Verbindungsschicht,

C) eine Heißsiegelschicht aus amorphem Polyester bzw. Copolyester oder aus einem amorphen, schlagzäh modifizierten Polyester oder Copolyester.

Die Barrierefolie A) besteht vorzugsweise aus Polyamid (PA), Polyvinylalkohol (PVOH) oder Ethylenvinylalkohol-Copolymer (EVOH) oder aus der schichtweisen Kombination von PA und EVOH oder aus Mischungen von PA und EVOH und ist vorzugsweise mindestens monoaxial verstreckt.

Diese Folie ist üblicherweise frontal oder gekontert im Flexo- oder Tiefdruckverfahren bedruckt.

Die Heißsiegelschicht C) besteht überwiegend aus einem amorphen Polyester. Besonders bevorzugte Polyester sind Polyethylenterephthalat-Homo- bzw. Copolymere, die eine verringerte Kristallisationsneigung zeigen. Die Kristallisationsneigung von Polyethylenterephthalat wird z.B. durch das Einpolymerisieren von Comonomeren wie Isophthalsäure oder 1,4-Cyclohexandimethanol (CHDM) reduziert.

Weiterhin bevorzugt für den Einsatz als Heißsiegelschicht sind amorphe, schlagzäh modifizierte, überwiegend aus Polyethylenterephthalat-Homo- bzw. Copolymer bestehende Materialien, die sich dadurch auszeichnen, daß der Sekantenmodul von Folien aus diesem Stoff maximal 1800 N/mm$^2$ beträgt.

Die Heißsiegelschicht ist festversiegelnd oder abziehfähig gegen sich selbst oder eine zweite Folie ausgeführt.

Die obengenannten Folien A) und C) sind in einer bevorzugten Ausführungsform miteinander über eine Klebeschicht B) verbunden. Für die Klebeschicht wird ein Reaktivklebstoff wie z.B. ein Ein- oder Zwei-Komponenten-Polyurethanklebstoff oder ein polyolefinischer Haftvermittler wie z.B. ein anhydrit-modifiziertes Ethylenacrylat verwendet.

Gegebenenfalls können die beiden Folien auch ohne Klebstoff verbunden werden, z.B. durch Extrusionsbeschichtung der Barrierefolie A) mit der Heißsiegelschicht C).

Die einzelnen Schichten weisen vorzugsweise folgende Dicken auf:

2

| Schicht A: | 10 - 50 $\mu$m |
|---|---|
| Schicht B: | 0,1 - 20 $\mu$m |
| Schicht C: | 10 - 150 $\mu$m. |

Es hat sich herausgestellt, daß die Verbundfolien mit dem hier beschriebenen Aufbau sich besonders gut für die Verpackung von empfindlichen Lebensmitteln eignen:

Polyester besitzen eine besonders gute Sperrwirkung gegen viele Aromastoffe und verhalten sich in Kontakt mit den meisten Füllgütern geschmackneutral. Weiterhin weisen sie eine gegenüber den meisten Polyolefinen hohe Steifigkeit auf.

Durch die Verwendung eines Polyesters als Siegelschicht anstelle eines Polyolefins verlegt man zum einen eine Aromasperrschicht direkt an das Füllgut. Zum anderen ist es möglich, auch die Dicke der hier beschriebenen Verbundfolien zu reduzieren, ohne Einbußen im Hinblick auf benötigte Steifigkeit hinzunehmen.

Die Eigenschaften der Polyester-Siegelschicht als Aromasperrschicht werden ergänzt durch die Gasbarrierefolie auf der Außenseite des Verbundes.

Die Eigenschaften der Mehrschichtfolie gemäß der vorliegenden Erfindung werden nach den folgenden Methoden bestimmt:

Die Sauerstoffdurchlässigkeit der Folien wird nach DIN 53 380, Teil 3 bestimmt.

Die Permeation von Aromastoffen durch Folien läßt sich meßtechnisch sehr schwer erfassesn, da es sich immer um sehr kleine Mengen an wandernden Stoffen handelt. Ein zuverlässiger Sensor für Geruchsstoffe auch in Kleinsten Mengen ist jedoch die menschliche Nase. Die Aromasperrwirkung wird deshalb bestimmt, indem man mittels Geruchsprobe prüft, wann ein intensiv riechender Aromastoff durch eine Folie permeiert ist. Als Aromastoff wird Eugenol ($C_{10}H_{12}O_2$, 4-Allyl-2-methoxyphenol) gewählt, das z.B. in Nelkenöl vorkommt.

Meßverfahren:

In eine mit Filterpapier ausgelegte Schale wurden fünf Tropfen Eugenol getropft. Die Schalen wurden in Siegelrandbeuteln (100 mm x 100 mm) aus verschiedenen Mehrschichtfolien gemäß Beispiel 1 und 2 und Vergleichsbeispiel 1 bis 3 verpackt und in verschlossenen Glasbehältern gelagert. In regelmäßigen Abständen wurde mittels Geruchsprobe geprüft, ob der Aromastoff aus den Siegelrandbeuteln in die Umgebung (das Innere der Glasbehälter) übergegangen war.

Die Steifigkeit wird über den Sekantenmodul auf einer Zugprüfmaschine vom Typ Zwick 1445 beurteilt (DIN 53455).

**Beispiel 1**

| | |
|---|---|
| Schicht A (Außenschicht): | Gasbarriereschicht aus Coextrudat Polyamid 6 / Ethylenvinylalkohol-Copolymer / Polyamid 6, monoaxial gereckt, 15 $\mu$m, Typ Walomid Combi XXL 15 |
| Schicht B: | Zwei-Komponenten-Polyurethanklebstoff, 2 $\mu$m |
| Schicht C (Innenschicht): | Siegelschicht aus amorphem Polyethylenterephthalat, 40 $\mu$m, schlagzähmodifiziert, Typ Selar PT 4234 der Fa. Du Pont de Nemours |

**Beispiel 2**

| | |
|---|---|
| Schicht A (Außenschicht): | Gasbarriereschicht Polyvinylalkohol, biaxial gereckt, 12 $\mu$m, Typ Bovlon EX der Fa. Nippon Gohsei, Japan |
| Schicht B: | Zwei-Komponenten-Polyurethanklebstoff, 2 $\mu$m |
| Schicht C (Innenschicht): | Siegelschicht aus amorphem Polyethylenterephthalat, 20 $\mu$m, schlagzähmodifiziert, Typ Selar PT 4234 der Fa. Du Pont de Nemours |

**Vergleichsbeispiel 1**

| | |
|---|---|
| Schicht A (Außenschicht): | Gasbarriereschicht aus Coextrodat Polyamid 6 / Ethylenvinylalkohol-Copolymer / Polyamid 6, monoaxial gereckt, 15 $\mu$m, Typ Walomid Combi XXL 15 |

| | |
|---|---|
| Schicht B: | Zwei-Komponenten-Polyurethanklebstoff, 2 $\mu$m |
| Schicht C (Innenschicht): | Siegelschicht aus LLPDE (Linear Low Density PolyEthylen), 40 $\mu$m |

**Vergleichsbeispiel 2**

| | |
|---|---|
| Schicht A (Außenschicht): | Trägerfolie aus biaxial gerecktem Polypropylen (BOPP), 20 $\mu$m, Typ Walothen C 20 SE |
| Schicht B: | Zwei-Komponenten-Polyurethan-Klebstoff, 2 $\mu$m |
| Schicht C (Innenschicht): | Siegelschicht aus amorphem Polyethylenterephtalat, 40 $\mu$m, schlagzäh-modifiziert, Typ Selar PT 4234 der Fa. Du Pont de Nemours |

**Vergleichsbeispiel 3**

| | |
|---|---|
| Schicht A (Außenschicht): | Trägerfolie aus biaxial gerecktem Polypropylen (BOPP), 20 $\mu$m, Typ Walothen C 20 SE |
| Schicht B: | Zwei-Komponenten-Polyurethan-Klebstoff, 2 $\mu$m |
| Schicht C (Innenschicht): | Siegelschicht aus LLPDE (Linear Low Density PolyEthylen), 30 $\mu$m, |

**Vergleich der Eigenschaften verschiedener Verbundfolien**

(Beispiele 1 bis 2 und Vergleichsbeispiele 1 bis 3)

| | Beispiel 1 | Beispiel 2 | Vergleichs-beispiel 1 | Vergleichs-beispiel 2 | Vergleichs-beispiel 3 |
|---|---|---|---|---|---|
| Schicht A | PA6/EVOH/PA6 monoaxial gereckt | PVOH, biaxial gereckt | PA6/EVOH/PA6 monoaxial gereckt | BOPP | BOPP |
| Schicht B | 2K-Polyurethan-Klebstoff | 2K-Polyurethan-Klebstoff | 2K-Polyurethan-Klebstoff | 2K-Polyurethan-Klebstoff | 2K-Polyurethan-Klebstoff |
| Schicht C | PETP, schlagzäh-modifiziert | PETP, schlagzäh-modifiziert | LLDPE | PETP, schlagzäh | LLDPE |
| Sauerstoff-durchlässigkeit (23°C, 0 % rel. Feuchte) | 1,5 $cm^3(m^2\ d\ bar)$ | < 1,0 $cm^3(m^2\ d\ bar)$ | 1,5 $cm^3(m^2\ d\ bar)$ | > 1000 $cm^3(m^2\ d\ bar)$ | > 1000 $cm^3(m^2\ d\ bar)$ |
| Durchgang von Eugenol durch die Folie nach ... | > 23 Wochen | > 23 Wochen | 17 Wochen | 17 Tagen | 2 Tagen |
| Sekantenmodul (längs/quer) | 2100/1360 $N/mm^2$ | 4400/4700 $N/mm^2$ | 1050/900 $N/mm^2$ | 1870/2500 $N/mm^2$ | 1220/1980 $N/mm^2$ |

**Patentansprüche**

1. Mehrschichtige Verbundfolie, bestehend aus Gas-Barriereschicht A, Heißsiegelschicht C sowie gegebenenfalls Klebe- bzw. Verbindungsschicht B, dadurch gekennzeichnet, daß die einzelnen Schichten in der Verbundfolie wie folgt angeordnet sind:

A     eine metall- und chlorfreie Gas-Barriereschicht,

B     eine Klebe- oder Verbindungsschicht,

C     eine Heißsiegelschicht aus amorphem Polyester bzw. Copolyester oder aus einem amorphen, schlagzäh modifizierten Polyester oder Copolyester.

2.  Mehrschichtige Verbundfolie gemäß Anspruch 1, dadurch gekennzeichnet, daß die Barrierefolie A aus Polyamid (PA), Polyvinylalkohol (PVOH) oder Ethylenvinylalkohol-Copolymer (EVOH) oder aus der schichtweisen Kombination von PA und EVOH oder aus Mischungen von PA und EVOH besteht und vorzugsweise mindestens monoaxial verstreckt ist.

3.  Mehrschichtige Verbundfolie gemäß einem der Ansprüche 1 oder 2, dadurch gekennzeichnet, daß die Heißsiegelschicht überwiegend aus einem amorphen Polyethylenterephthalat-Homo- bzw. Copolymer besteht.

4.  Mehrschichtige Verbundfolie gemäß einem der Ansprüche 1 oder 2, dadurch gekennzeichnet, daß die Heißsiegelschicht aus einem amorphen, schlagzäh modifizierten, überwiegend aus Polyethylenterephthalat-Homo- bzw. Copolymer bestehenden Material gefertigt wird, das sich dadurch auszeichnet, daß der Sekantenmodul von Folien aus diesem Stoff maximal 1800 N/mm$^2$ beträgt.

5.  Mehrschichtige Verbundfolie gemäß einem der Ansprüche 3 oder 4, dadurch gekennzeichnet, daß die Heißsiegelschicht festversiegelnd oder abziehfahig gegen sich selbst oder gegen eine zweite Folie ausgeführt ist.

6.  Mehrschichtige Verbundfolie gemäß einem der Ansprüche 1 bis 5, dadurch gekennzeichnet, daß die oben genannten Folien A und C über eine Klebeschicht B aus Zwei-Komponenten-Polyurethanklebstoff bzw. einem polyolefinischen Haftvermittler verbunden sind.

7.  Mehrschichtige Verbundfolie gemäß Anspruch 6, dadurch gekennzeichnet, daß die Heißsiegelschicht C gegebenenfalls ohne Klebschicht durch Extrusionsbeschichtung mit der Gas-Barriereschicht verbunden ist.

8.  Mehrschichtige Verbundfolie gemäß einem der Ansprüche 1 bis 7, dadurch gekennzeichnet, daß die Verbundfolie bedruckt ist.

9.  Verwendung der mehrschichtigen Verbundfolie gemäß einem der Ansprüche 1 bis 8 zur Verpackung von Lebensmitteln.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 215 630 (THE PROCTER & GAMBLE COMPANY) * Seite 4, Zeile 18 - Seite 5, Zeile 18; Abbildung 4 * | 1-3 | B32B27/08 |
| Y | * Seite 6, Zeile 21 - Seite 7, Zeile 2 * | 6 | |
| A | * Seite 11, Zeile 25 - Seite 12, Zeile 4 * | 7,9 | |
| | --- | | |
| X | DATABASE WPI Week 8743, Derwent Publications Ltd., London, GB; AN 87-298885 (43) & AU-D-6 966 387 (INT. PAPER CO.) 10. September 1987 * Zusammenfassung * | 1-3 | |
| A | | 9 | |
| | --- | | |
| P,X | EP-A-0 613 773 (WOLFF WALSRODE AG) * Seite 3, Zeile 4 - Zeile 7; Ansprüche * | 1-9 | |
| | --- | | |
| Y | EP-A-0 230 344 (MITSUI PETROCHEMICAL INDUSTRIES, LTD.) * Seite 3, Zeile 22 - Seite 4, Zeile 6; Anspruch 1 * | 6 | RECHERCHIERTE SACHGEBIETE (Int.Cl.6) B32B |
| | --- | | |
| A | DATABASE WPI Week 9027, Derwent Publications Ltd., London, GB; AN 90-206289 (27) & JP-A-2 137 926 (DAINIPPON PRINTING KK) 28. Mai 1990 * Zusammenfassung * | 1-3,6,8,9 | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 20. Dezember 1994 | Pamies Olle, S |

EPO FORM 1503 03.82 (P04C03)

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DATABASE WPI<br>Week 8644,<br>Derwent Publications Ltd., London, GB;<br>AN 86-288422 (44)<br>& JP-A-61 211 034 (TOYO SEIKAN KAISHA) 19.<br>September 1986<br>* Zusammenfassung *<br>----- | 1-3 | |

**RECHERCHIERTE SACHGEBIETE (Int.Cl.6)**

Der vorliegende Recherchenbericht wurde für alle Patentansprüche erstellt

| Recherchenort | Abschlußdatum der Recherche | Prüfer |
|---|---|---|
| DEN HAAG | 20. Dezember 1994 | Pamies Olle, S |

EPO FORM 1503 03.82 (P04C01)